# EUROPÄISCHE PATENTSCHRIFT

(11) **EP 2 065 173 B1**
(45) Veröffentlichungstag und Bekanntmachung des Hinweises auf die Patenterteilung: **14.02.2018**
(21) Anmeldenummer: 08019666.0
(22) Anmeldetag: 11.11.2008
(51) Int. Cl.: B30B 9/12, B30B 11/24, B29C 47/60

(54) **Schneckenwellenoberfläche**
Screw shaft surface
Surface d'arbre de vis sans fin

(30) Priorität: 30.11.2007 AT 19592007
(43) Veröffentlichungstag der Anmeldung: 03.06.2009
(73) Patentinhaber: Andritz AG, 8045 Graz (AT)
(72) Erfinder: Magor, Wolfgang, Dipl.Ing., 8010 Graz (AT); Scheucher, Peter, Dipl.Ing.Dr., 8062 Kumberg (AT); Riemer, Hubert, Ing., 8113 St. Oswald (AT)
(74) Vertreter: Schweinzer, Friedrich

(56) Entgegenhaltungen:
- EP-A1- 0 773 100
- CH-A5- 669 212
- JP-A- 5 200 834
- JP-A- 2003 305 591
- JP-U- 56 080 892
- US-A- 3 518 721
- US-A- 4 457 227
- US-A- 5 341 730

## Beschreibung

Die Erfindung bezieht sich auf eine Schneckenpresse, vorzugsweise zum Abscheiden von Flüssigkeit aus einem Transportgut, umfassend eine Schneckenwelle samt einer spiralförmig an der Schneckenwelle angeordneten Förderwendel und einen diese umgebenden Gehäusemantel, wobei zwischen der Schneckenwelle, der Förderwendel und dem Gehäusemantel ein Transportgang für das zu befördernde Transportgut ausgebildet ist, gemäß dem Oberbegriff des Anspruchs 1.

Bei dem von der Schneckenpresse aufzubereitenden Transportgut handelt es sich zumeist um Feststoff-Flüssigkeits-Gemische wie z.B. industriell hergestellte Zellstofffasern, aus welchen mitgeführte Flüssigkeit extrahiert werden soll.

Das Prinzip des mittels der Schneckenpresse bewerkstelligten Pressvorganges ist hinreichend bekannt: Innerhalb eines zylindrischen oder kegeligen Gehäusemantels ist eine mit einer Förderwendel versehene Schneckenwelle gelagert. Der Gehäusemantel weist eine mit einem Einfülltrichter versehene Einfüllöffnung und eine mit einem Mündungsstutzen versehene Auslassöffnung auf.

Zwischen dem Gehäusemantel und der Schneckenwelle bzw. der Förderwendel sind spiral- bzw. schraubenförmige Transportgänge ausgebildet, welche von der Einfüllöffnung bis zur Auslassöffnung führen und welche sich in Richtung des Bereichs der Auslassöffnung sukzessive verengen.

Indem nun die Schneckenwelle in Rotation versetzt wird, wird ein über die Einfüllöffnung in die Schneckenpresse eingebrachtes Transportgut von der an der Schneckenwelle angebrachten Förderwendel entlang der Transportgänge bis zur Auslassöffnung befördert und dabei kontinuierlich verdichtet bzw. ausgepresst.

Während dieses Verdichtungsvorganges aus dem Transportgut abgeschiedene Flüssigkeit wird über schlitz- oder lochförmige Flüssigkeitsdurchtritte im Gehäusemantel einer Auffangvorrichtung zugeführt.

Eine derartige Schneckenpresse ist z.B. aus der AT 412 857 B bekannt. Eine weitere Schneckenpresse ist in der US 5 341 730 A beschrieben und zeigt eine mehreren Teilen zusammengesetzte Schneckenwelle mit offensichtlich intergrierter Schneckenwendel und mehreren Drosselstellen. Die Welle(nteile) sind glatt und weist (weisen) hierbei kein Oberflächenprofil auf, insbesondere sind hier weder Rillen noch Erhebungen zu sehen. Insbesondere gibt es keine unter einer Neigung zu einer in Seitenansicht der Schneckenwelle betrachteten Erzeugenden der Förderwendel. Die JP 2003 305591A zeigt weiters eine Schneckenpresse, bei der gegen den Verschleiß ein spiralförmiges glattes Blech auf die Welle aufgebracht wird. Ein Oberflächenprofil ist hier nicht vorgesehen. Es würde hier sogar den Verschleiß des spiralförmigen Bleches drastisch erhöhen.
Die D3 (EP 0 773 100 A1, BABBINI) zeigt ein Doppelwellenschraubenpressaggregat, bei dem zusätzlich zur Wendel eine weitere Wendel mit wesentlich geringerer Höhe vorgesehen ist. Die Wendeln der beiden Wellen sind so angebracht, dass immer eine Wendel mit großer Höhe der einen Welle mit einer Wende niedriger Höhe der anderen Welle eingreift. Auch hier ist die Oberfläche der Welle glatt ausgeführt. Die US 3 518 721 A zeigt einen Schneckenextruder für Thermoplastik, bei dem zwischen den Flügeln Gewindegänge vorgesehen sind. Es gibt hier aber keine Förderwendel (und somit Förderung) und auch keinen Transportgang. Weiters sind die Gewindegänge parallel zur Oberfläche der Flügel angeordnet und weisen keine Neigung auf.

Als problematisch erweist sich bei gattungsgemäßen Schneckenpressen der Umstand, dass das in den Transportgängen beförderte Transportgut einen fortwährenden Abrieb an der Schneckenwelle verursacht und die Schneckenwelle nach einer gewissen Betriebszeit schließlich glatt poliert ist. Eine auf diese Weise polierte Schneckenwelle besitzt die Neigung, dass sich das Transportgut, z.B. die Zellstofffasern, an der Schneckenwellenoberfläche verklebt und sich somit stärker mit der Schneckenwelle mitdreht als dies bei der vormals rauen Schneckenwelle der Fall war.

Das stärkere Mitdrehen des Transportguts mit der Schneckenwelle bedingt eine geringere Durchsatzgeschwindigkeit des Transportguts durch die Förderkanäle, was wiederum durch eine erhöhte Drehzahl der Schneckenwelle und somit einen erhöhten Energieaufwand kompensiert werden muss.

Des Weiteren bewirkt das Anhaften von Transportgut-Bestandteilen an der Schneckenwelle eine ungleichmäßige Füllung der Transportgänge oder sogar eine Verstopfung ebendieser.

Eine weitere unerwünschte Wirkung der beschriebenen Verklebeneigung der Schneckenwelle ist es, dass die Flüssigkeitsabscheidung aus dem Transportgut - betrachtet im Vergleich einzelner über die Schneckenwellenlänge verteilter Förderkanalsektoren - inhomogener wird.

Um dieser Problematik blank polierter Schneckenwellen entgegenzuwirken, wurden bereits mehrere Versuche unternommen.

So wird es etwa praktiziert, die Schneckenwellen-Oberfläche mit geeigneten Beschichtungen, z.B. aus Wolframcarbid, zu versehen und auf diese Weise eine raue Oberflächenbeschaffenheit bzw. eine damit einhergehende geringe Verklebeneigung der Schneckenwelle über etwas längere Zeit zu erhalten. Derartige Beschichtungen werden entweder direkt auf die Schneckenwelle oder auf ein Blechelement, welches anschließend an der Schneckenwellen-Oberfläche befestigt wird, aufgespritzt bzw. aufgesintert.

Als Nachteil derartiger Beschichtungsverfahren muss angeführt werden, dass diese sehr aufwändig und teuer sind. Dennoch ist nur eine unbefriedigende Nachhaltigkeit der Beschichtungsmaßnahme gegeben, und Erfahrungen aus der Praxis zeigen, dass die an der Schneckenwelle aufgebrachte Beschichtung z.B. bei der Aufbereitung von Altpapier mit relativ hohem Aschegehalt bereits in weniger als zwei Jahren verschlissen bzw. die Schneckenwelle wieder glatt poliert und somit erneut für Sedimentierungen des Transportguts anfällig ist.

Aufgrund des hohen Aufwands einer Beschichtung der Schneckenwelle wird es daher auch praktiziert, die Schneckenwelle in regelmäßigen Zeitabständen mittels Schleifbearbeitung wieder aufzurauhen, sodass die Oberfläche der Schneckenwelle quasi wieder in einen Zustand wie unmittelbar nach deren Fertigung versetzt wird.

Ein derartiges Aufrauhen bzw. Nachbearbeiten muss jedoch in relativ kurzen Zeitintervallen vorgenommen werden (mitunter alle ein bis drei Monate) und beansprucht einen hohen manuellen Aufwand. Ein während dieses Arbeitsganges erforderliches Stilllegen der Schneckenpresse führt zu Produktionseinbußen.

Der vorliegenden Erfindung liegt daher die Aufgabe zugrunde, die genannten Nachteile zu vermeiden und eine dauernde Verklebefreiheit der Schneckenwelle gegenüber dem Transportgut zu ermöglichen bzw. eine haftabweisende Schneckenwellen- Oberflächenstruktur mit einer deutlich gesteigerten Lebensdauer bereitzustellen.

Erfindungsgemäß wird diese Aufgabe durch eine Schneckenpresse mit den kennzeichnenden Merkmalen des Anspruchs 1 gelöst.

Eine gattungsgemäße Schneckenpresse zum Abscheiden von Flüssigkeit aus einem Transportgut umfasst eine Schneckenwelle samt einer Förderwendel und einen diese umgebenden Gehäusemantel, wobei zwischen der Schneckenwelle, der Förderwendel und dem Gehäusemantel Transportgänge für das zu befördernde Transportgut ausgebildet sind. Hierbei ist es erfindungsgemäß vorgesehen, dass die Schneckenwelle zumindest im Bereich eines Abschnitts des Transportganges ein Oberflächenprofil aufweist, wobei das Oberflächenprofil Rillen bzw. Erhebungen aufweist, welche unter einer Neigung zum spiralförmigen Verlauf der Förderwendel (also nicht parallel zu diesem) verlaufen. Mit anderen Worten gesprochen verlaufen die Rillen/Erhebungen unter einer Neigung zu einer in Seitenansicht der Schneckenwelle betrachteten Erzeugenden der spiralförmigen Förderwendel. Indem also die Schneckenwelle bereichsweise profiliert wird, wird ein rhythmisches Abheben des Transportguts von der Oberfläche der Schneckenwelle erzwungen. Auf diese Weise kann ein Haften von Transportgut an der Schneckenwelle für sehr lange Zeit, eventuell sogar für die gesamte Lebensdauer der Schneckenpresse hintangehalten werden. Ein wiederholtes Abschleifen oder Beschichten der Schneckenwelle kann entfallen, sodass Stillstandszeiten verhindert und die Produktionseffizienz der Schneckenpresse gesteigert werden können. Um ein ständiges Abheben des Transportguts von der Schneckenwellen-Oberfläche herbeizuführen, ist es von Bedeutung, dass der durch die spiralförmige Förderwendel definierte Förderfluss des Transportguts durch das erfindungsgemäße Oberflächenprofil unterbrochen bzw. gequert wird.

In einer bevorzugten Ausgestaltung des erfindungsgemäßen Oberflächenprofils verlaufen die Rillen bzw. Erhebungen im Wesentlichen in Umfangsrichtung der Schneckenwelle, also im Wesentlichen normal zur Schneckenwellenachse. Ein derartiges Oberflächenprofil ist einfach zu fertigen und bewirkt ein effektives Abheben des Transportguts von der Oberfläche der Schneckenwelle.

In einer bevorzugten Ausführungsweise ist das Oberflächenprofil einstückig mit der Schneckenwelle gefertigt, wobei das Oberflächenprofil vorzugsweise mittels eines mechanischen Bearbeitungsverfahrens aus der Schneckenwelle herausgearbeitet ist. Eine derartige Ausführung erweist sich als robust und ermöglicht eine einfache Fertigung.

Alternativ dazu kann es sich beim Oberflächenprofil auch um eine beliebige Anzahl an separat von der Schneckenwelle gefertigten und in der Folge an der Schneckenwelle angebrachten Aufsatzelementen handeln. Die Aufsatzelemente können mittels eines geeigneten Verfahrens vorgefertigt werden. Die Ausführung des Oberflächenprofils als Aufsatzelement(e) ermöglicht eine Nachrüstung bereits im Betrieb befindlicher Schneckenwellen.

In einer kostengünstigen Ausführungsweise handelt es sich beim Aufsatzelement um einen (beliebig vorgeformten bzw. bearbeiteten) Blechstreifen.

Es besteht die Möglichkeit, das Aufsatzelement gewindeförmig auf der Schneckenwelle aufzuwickeln, um fertigungs- und montagetechnische Vorteile zu erzielen.

Eine einfache und haltbare Befestigung des Aufsatzelementes an der Schneckenwelle kann durch Anschweißen erzielt werden.

Gemäß einer bevorzugten Ausführungsvariante der Erfindung umfasst das - in einem Längsquerschnitt durch die Schneckenwelle betrachtete - Oberflächenprofil einen, in Förderrichtung gesehen, gegenüber der Schneckenwellenachse ansteigenden, vorzugsweise um einen Winkel zwischen 5 und 45° ansteigenden Profilabschnitt und einen wieder in Richtung der Schneckenwellenachse abfallenden, vorzugsweise im Wesentlichen normal zur Schneckenwellenachse abfallenden Profilabschnitt. Das Transportgut wird durch ein derartiges Oberflächenprofil fortwährend von der Schneckenwellen-Oberfläche abgehoben und kann sich nicht auf dieser verfestigen.

In praktischen Versuchen hat es sich als besonders günstig hinsichtlich der haftaversiven Eigenschaften des Oberflächenprofils erwiesen, dass zwischen dem ansteigenden Profilabschnitt und dem abfallenden Profilabschnitt noch ein im Wesentlichen parallel zur Schneckenwellenachse verlaufender Profilabschnitt vorgesehen ist.

Hierbei kann eine beliebige Anzahl an derartigen Profilabschnittgruppen hintereinander an der Schneckenwelle angeordnet sein.

In einer bevorzugten Ausführungsweise besitzt das Oberflächenprofil eine normal zur Schneckenwellenachse gemessene Profiltiefe von mindestens 0,5 mm. Bei einer derartigen Profiltiefe ist kein rascher Verschleiß des Oberflächenprofils zu erwarten.

Die Erfindung wird nun anhand eines Ausführungsbeispiels näher erläutert. Dabei zeigt:
- Fig.1: eine schematische Darstellung einer erfindungsgemäßen Schneckenwelle
- Fig.2: ein Detail "X" aus Fig.1
- Fig.3: eine alternative Ausführung eines erfindungsgemäßen Schneckenwellen-Oberflächenprofils
- Fig.4: eine alternative Ausführung eines erfindungsgemäßen Schneckenwellen-Oberflächenprofils
- Fig.5: eine alternative Ausführung eines erfindungsgemäßen Schneckenwellen-Oberflächenprofils
- Fig.6: eine alternative Ausführung eines erfindungsgemäßen Schneckenwellen-Oberflächenprofils

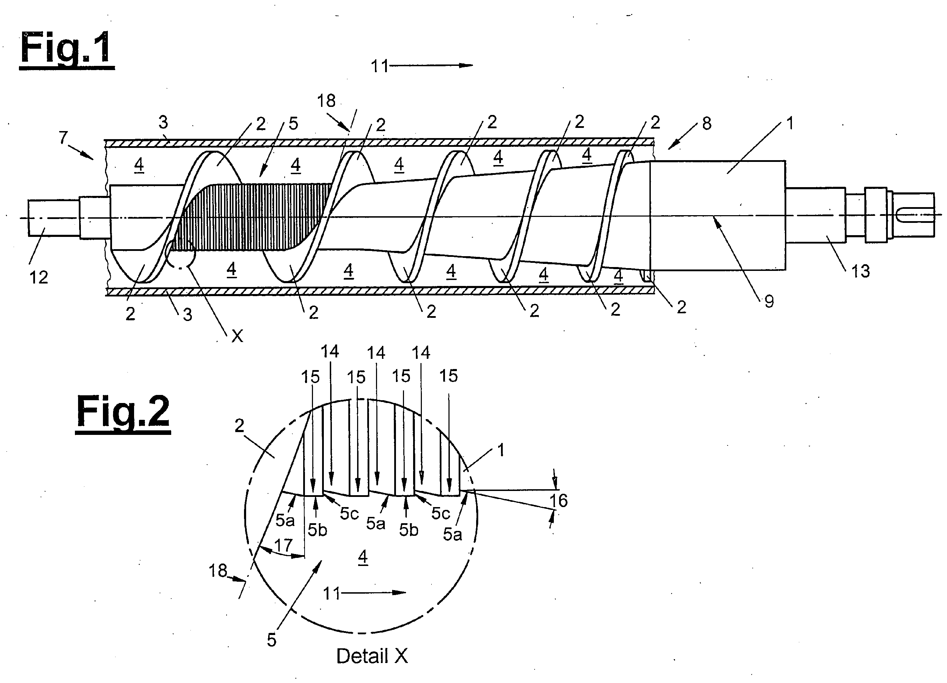

Fig.1 zeigt eine erfindungsgemäße Schneckenwelle 1, welche zum Einbau in einen lediglich schematisch dargestellten Gehäusemantel 3 einer Schneckenpresse vorgesehen ist.

Der im vorliegenden Ausführungsbeispiel zylindrisch ausgeführte Gehäusemantel 3 weist eine mit einem (nicht dargestellten) Einfülltrichter für ein jeweiliges Fördergut versehene Einfüllöffnung 7 und eine mit einem (ebenfalls nicht dargestellten) Mündungsstutzen versehene Auslassöffnung 8 auf.

Die Schneckenwelle 1 ist an Lagerungsabschnitten 12, 13 im Gehäusemantel gelagert und weist eine spiral- bzw. schraubenförmig verlaufende Förderwendel 2 auf, deren Windungen sich gemäß Fig.1 von Richtung der Einfüllöffnung 7 in Richtung der Auslassöffnung 8 sukzessive verengen, wobei die Schneckenwelle 1 einen sich kegelförmig in Richtung der Auslassöffnung 8 erweiternden Abschnitt aufweist, um eine fortschreitende Verdichtung des in Förderrichtung 11 beförderten Transportguts zu bewirken.

Die Schneckenwelle 1 ist durch eine Antriebseinrichtung in Rotation versetzbar, wobei das Transportgut durch einen spiralförmigen Transportgang 4, welcher zwischen dem Gehäusemantel 3 und der Schneckenwelle 1 bzw. der Förderwendel 2 ausgebildet ist, geführt wird und hierbei eine fortschreitende Entwässerung erfährt.

Um solcherart vom Transportgut abgeschiedene Flüssigkeit abzuführen, sind im Gehäusemantel 3 (nicht dargestellte) Flüssigkeitsdurchtritte vorgesehen, welche z.B. schlitz- oder lochförmig ausgeführt sind. Die durch die Flüssigkeitsdurchtritte abfließende Flüssigkeit wird in einer jeweils dafür vorgesehenen Auffangvorrichtung gesammelt.

Bei dem von der Schneckenpresse zu verdichtenden Transportgut kann es sich beispielsweise um Faserstoff- oder Schlammsuspensionen, Altpapier, Sägespäne, Holzabfälle sowie Kunststoff-, Karton- oder Holzverpackungen handeln.

Um einen durch derartige Materialien verursachten Abrieb der Schneckenwelle 1 mit den bereits eingangs geschilderten Nachteilen möglichst dauerhaft zu verhindern, ist es erfindungsgemäß vorgesehen, dass die Schneckenwelle 1 zumindest im Bereich eines Abschnitts des Transportganges 4 mit einem Oberflächenprofil 5 versehen ist. Ein derartiges Oberflächenprofil 5 ist rein beispielhaft in Fig.2 abgebildet, welche ein Detail "X" aus Fig.1 zeigt.

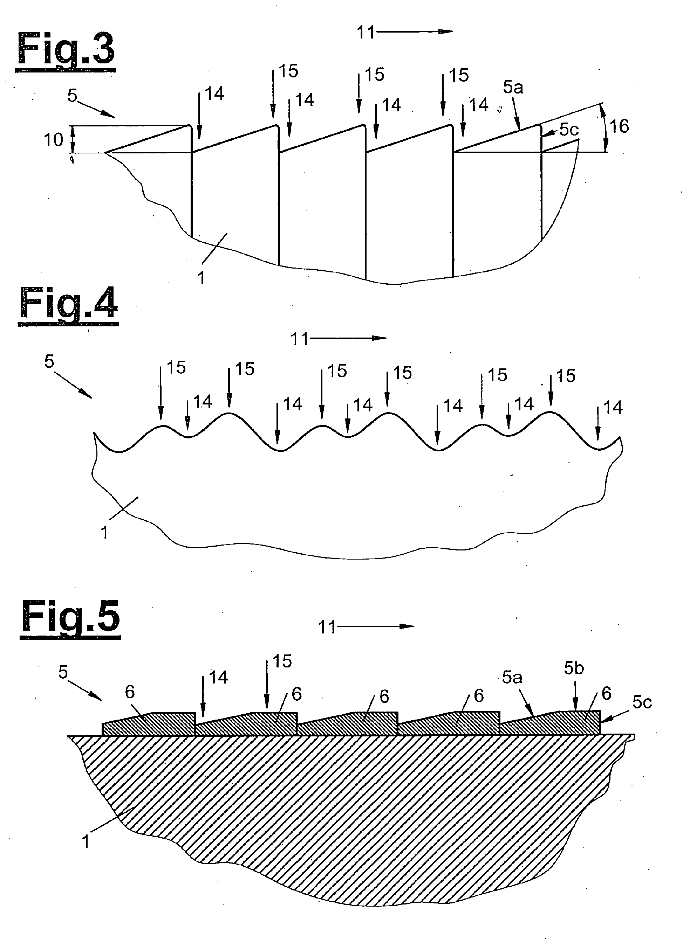

Grundsätzlich kann sich das Oberflächenprofil 5 jedoch aus beliebig zueinander in Beziehung stehenden Rillen 14 und Erhebungen 15 zusammensetzen (siehe auch Fig.3 und Fig.4). Die Geometrie des Oberflächenprofils 5 kann je nach Einsatzgebiet bzw. nach Art des zu befördernden Transportguts ausgewählt werden. Hierbei sollte das Oberflächenprofil 5 jedoch eine normal zu einer Schneckenwellenachse 9 gemessene Profiltiefe 10 von mindestens 0,5 mm aufweisen, um einen raschen Abrieb zu vermeiden.

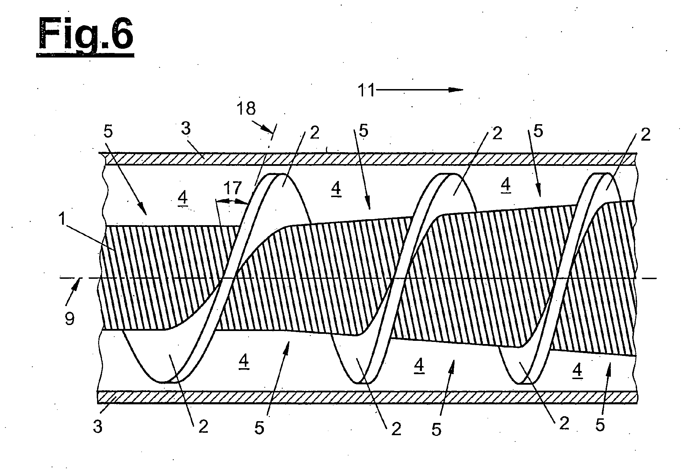

Es sei angemerkt, dass das erfindungsgemäße Oberflächenprofil 5 in Fig.1 nur partiell eingezeichnet ist und sich in der Praxis über die gesamte dem Transportgang 4 zugewandte Oberfläche der Schneckenwelle 1 erstreckt (so in Fig.6 dargestellt). Es ist jedoch auch möglich, die Schneckenwelle 1 nur in ausgewählten Abschnitten, z.B. nur in einem der Auslassöffnung 8 vorgelagerten Bereich mit einem Oberflächenprofil 5 zu versehen, da das Fördergut in jenen Bereichen des Transportganges 4 aufgrund des lokal hohen Kompressionsgrades am ehesten zum Stocken neigt.

Die Rillen 14 bzw. die Erhebungen 15 des erfindungsgemäßen Oberflächenprofils 5 sind so angeordnet, dass sie stets unter einer gewissen Neigung 17 zum spiralförmigen Verlauf der Förderwendel 2 verlaufen bzw. den Verlauf des Transportganges 4 queren. Genauer gesagt, verlaufen die Rillen 14 bzw. Erhebungen 15 unter einer Neigung 17 zu einer in Seitenansicht der Schneckenwelle 1 betrachteten Erzeugenden 18 der spiralförmigen Förderwendel 2 (eingezeichnet in Fig.1, 2 und 6).

In einer bevorzugten Ausgestaltung des erfindungsgemäßen Oberflächenprofils 5 verlaufen die Rillen 14 bzw. Erhebungen 15 im Wesentlichen in Umfangsrichtung der Schneckenwelle 1 bzw. normal zur Schneckenwellenachse 9 (so in Fig.1-3 dargestellt).

Ebenso wäre es jedoch möglich, dass die Rillen 14 bzw. Erhebungen 15 des Oberflächenprofils 5 unter einer beliebigen Neigung zur Schneckenwellenachse 9 verlaufen, z.B. geringfügig zu einer auf die Schneckenwellenachse 9 gedachten Normalen divergieren (so in Fig.6 dargestellt).

Die Rillen 14 und Erhebungen 15 sollten hierbei jedenfalls nicht parallel zum Verlauf der Förderwendel 2 bzw. des Transportganges 4 angeordnet sein, sondern diesen unter einer mehr oder weniger großen Neigung 17 queren, um ein rhythmisches Abheben des Transportguts von der Oberfläche der Schneckenwelle 1 zu gewährleisten.

Im Sinne einer ausreichenden Verschleißresistenz sollte das Oberflächenprofil 5 eine normal zur Schneckenwellenachse 9 gemessene Profiltiefe 10 von mindestens 0,5 mm aufweisen. Im Falle einer für mit Wasser gesättigte Zellstofffasern vorgesehenen Schneckenpresse wird etwa eine Profiltiefe 10 von 1,2 mm vorgeschlagen.

Das Oberflächenprofil 5 kann einstückig mit der Schneckenwelle 1 gefertigt sein, indem jenes z.B. im Dreh- oder Fräsverfahren aus der Schneckenwelle 1 herausgearbeitet ist. Hierbei wird die Schneckenwelle 1 mittels geeigneter mechanischer Bearbeitungsverfahren profiliert, noch bevor die Förderwendel 2 auf die Schneckenwelle 1 aufgesetzt bzw. angeschweißt wird.

Alternativ kann es sich beim Oberflächenprofil 5 auch um ein oder mehrere, separat gefertigte und an der Schneckenwelle 1 angebrachte Aufsatzelemente 6 handeln. In Fig.5 ist etwa eine Vielzahl an Aufsatzelementen 6 ersichtlich, welche in Form von vorbearbeiteten Blechstreifen, welche an der Schneckenwelle 1 aufgewickelt wurden, ausgeführt sind. Die Aufsatzelemente bzw. Blechstreifen 6 sind hierbei an der Schneckenwelle 1 angeschweißt. Selbstverständlich können der Blechstreifen bzw. die Aufsatzelemente 6 auch einstückig ausgeführt und gewindeartig auf der Schneckenwelle 1 aufgewickelt sein.

Eine besonders bevorzugte Ausführungsart des erfindungsgemäßen Oberflächenprofils 5 ist in Fig.2 ersichtlich: Hierbei weist das Oberflächenprofil 5 (betrachtet in einem Längsquerschnitt durch die Schneckenwelle 1 und in Förderrrichtung 11) einen gegenüber der Schneckenwellenachse 9 ansteigenden ersten Profilabschnitt 5a, sodann einen im Wesentlichen parallel zur Schneckenwellenachse 9 verlaufenden zweiten Profilabschnitt 5b und schließlich einen wieder in Richtung der Schneckenwellenachse 9 abfallenden dritten Profilabschnitt 5c auf.
Der gegenüber der Schneckenwellenachse 9 ansteigende Profilabschnitt 5a kann einen gegenüber der Schneckenwellenachse 9 gemessenen Winkel 16 zwischen 5 und 45° aufweisen. Um die Gleitreibung des Transportguts gering zu halten, wird jedoch ein Winkel 16 zwischen 5 und 20°, vorzugsweise ein Winkel 16 von ca. 10° vorgeschlagen.

Im vorliegenden Ausführungsbeispiel fällt der dritte Profilabschnitt 5c um 90° in Richtung der Schneckenwellenachse 9 ab.

Je nach Anwendungsgebiet bzw. nach Größe der Schneckenpresse kann eine beliebige Anzahl an derartigen Profilabschnittgruppen 5a, 5b, 5c oder 5a, 5c hintereinander an der Schneckenwelle 1 angeordnet sein.

Es versteht sich, dass mannigfaltige Variationen in der Ausgestaltung des erfindungsgemäßen Oberflächenprofils 5 denkbar sind, z.B. ein sägezahnförmiger Verlauf des Oberflächenprofils 5 gemäß Fig.3, ein wellenförmiger Verlauf gemäß Fig.4, schuppenförmige Verläufe sowie beliebige Kreuz- bzw. Rändelmuster.

## Patentansprüche

1. Schneckenpresse, vorzugsweise zum Abscheiden von Flüssigkeit aus einem Transportgut, umfassend eine Schneckenwelle (1) samt einer spiralförmig an der Schneckenwelle (1) angeordneten Förderwendel (2) und einen diese umgebenden Gehäusemantel (3), wobei zwischen der Schneckenwelle (1), der Förderwendel (2) und dem Gehäusemantel (3) ein Transportgang (4) für das zu befördernde Transportgut ausgebildet ist, wobei die Schneckenwelle (1) zumindest im Bereich eines Abschnitts des Transportganges (4) ein Oberflächenprofil (5) aufweist, **dadurch gekennzeichnet, dass** das Oberflächenprofil (5) Rillen (14) bzw. Erhebungen (15) aufweist, welche unter einer Neigung (17) zu einer in Seitenansicht der Schneckenwelle (1) betrachteten Erzeugenden (18) der spiralförmigen Förderwendel (2) verlaufen.

2. Schneckenpresse nach Anspruch 1, **dadurch gekennzeichnet, dass** die Rillen (14) bzw. Erhebungen (15) des Oberflächenprofils (5) im Wesentlichen in Umfangsrichtung der Schneckenwelle (1) verlaufen.

3. Schneckenpresse nach einem der Ansprüche 1 oder 2, **dadurch gekennzeichnet, dass** das - in einem Längsquerschnitt durch die Schneckenwelle betrachtete - Oberflächenprofil (5), in Förderrichtung (11) gesehen, einen gegenüber der Schneckenwellenachse (9) ansteigenden, vorzugsweise um einen Winkel (16) zwischen 5 und 45° ansteigenden Profilabschnitt (5a) und einen wieder in Richtung der Schneckenwellenachse (9) abfallenden, vorzugsweise im Wesentlichen normal zur Schneckenwellenachse (9) abfallenden Profilabschnitt (5c) umfasst.

4. Schneckenpresse nach Anspruch 3, **dadurch gekennzeichnet, dass** zwischen dem ansteigenden Profilabschnitt (5a) und dem abfallenden Profilabschnitt (5c) ein im Wesentlichen parallel zur Schneckenwellenachse (9) verlaufender Profilabschnitt (5b) vorgesehen ist.

5. Schneckenpresse nach einem der Ansprüche 3 oder 4, **dadurch gekennzeichnet, dass** mehrere Profilabschnittgruppen (5a, 5b, 5c) in Förderrichtung (11) hintereinander angeordnet sind.

6. Schneckenpresse nach einem der Ansprüche 1 bis 5, **dadurch gekennzeichnet, dass** das Oberflächenprofil (5) einstückig mit der Schneckenwelle (1) gefertigt, vorzugsweise mittels eines mechanischen Bearbeitungsverfahrens aus der Schneckenwelle (1) herausgearbeitet ist.

7. Schneckenpresse nach einem der Ansprüche 1 bis 5, **dadurch gekennzeichnet, dass** es sich bei dem Oberflächenprofil (5) um mindestens ein separat von der Schneckenwelle (1) gefertigtes und an der Schneckenwelle (1) angebrachtes Aufsatzelement (6) handelt.

8. Schneckenpresse nach Anspruch 6, **dadurch gekennzeichnet, dass** das Aufsatzelement (6) ein Blechstreifen ist.

9. Schneckenpresse nach Anspruch 7 oder 8, **dadurch gekennzeichnet, dass** das Aufsatzelement (6) gewindeförmig auf der Schneckenwelle (1) aufgewickelt ist.

10. Schneckenpresse nach einem der Ansprüche 7 bis 9, **dadurch gekennzeichnet, dass** das Aufsatzelement (6) auf der Schneckenwelle (1) angeschweißt ist.

11. Schneckenpresse nach einem der Ansprüche 1 bis 10, **dadurch gekennzeichnet, dass** das Oberflächenprofil (5) eine normal zur Schneckenwellenachse (9) gemessene Profiltiefe (10) von mindestens 0,5 mm aufweist.

## Claims

1. Screw press, preferably for removing liquid from a material to be conveyed, comprising a screw shaft (1) complete with a helical conveying flight (2) mounted on the screw shaft (1) and a housing shell (3) surrounding it, where a transport channel (4) is formed for the material to be conveyed between the screw shaft (1), the conveying flight (2) and the housing shell (3), where the screw shaft (1) has a surface profile (5), at least in one section of the transport channel (4), **characterised in that** the surface profile (5) has grooves (14) and elevations (15) that run on an incline (17) to a generatrix (18) of the helical conveying flight (2) observed in a side view of the screw shaft (1).

2. Screw press according to claim 1, **characterised in that** the grooves (14) and elevations (15) in the surface profile (5) run largely in the circumferential direction of the screw shaft (1).

3. Screw press according to one of claims 1 or 2, **characterised in that** the surface profile (5) - viewed in a cross-section along the length of the screw shaft - has a profile section (5a) that rises, preferably by an angle (16) between 5 and 45° in relation to the screw shaft axis (9), viewed in conveying direction (11), and a profile section (5c) that falls again, preferably largely perpendicular to the screw shaft axis (9), in the direction of the screw shaft axis (9).

4. Screw press according to claim 3, **characterised in that** a profile section (5b) running largely parallel to the screw shaft axis (9) is provided between the rising profile section (5a) and the falling profile section (5c).

5. Screw press according to one of claims 3 or 4, **characterised in that** several profile section groups (5a, 5b, 5c) are mounted one after the other in conveying direction (11).

6. Screw press according to one of claims 1 to 5, **characterised in that** the surface profile (5) is formed in one piece together with the screw shaft (1), preferably in a machining process applied to the screw shaft (1).

7. Screw press according to one of claims 1 to 5, **characterised in that** the surface profile (5) consists of at least one attached element (6) manufactured separately from the screw shaft (1) and then mounted on the screw shaft (1).

8. Screw press according to claim 6, **characterised in that** the attached element (6) is a sheet metal strip.

9. Screw press according to claim 7 or 8, **characterised in that** the attached element (6) is wound onto the screw shaft (1) like a thread.

10. Screw press according to one of claims 7 to 9, **characterised in that** the attached element (6) is welded to the screw shaft (1).

11. Screw press according to one of claims 1 to 10, **characterised in that** the surface profile (5) has a profile depth of at least 0.5 mm measured perpendicular to the screw shaft axis (9).

## Revendications

1. Presse à vis, de préférence pour séparer du liquide provenant d'un produit à transporter, comprenant un arbre (1) à vis ensemble avec une hélice de transport (2) disposée en spirale sur l'arbre (1) à vis et une enveloppe (3) de boîtier entourant cette dernière, entre l'arbre (1) à vis, l'hélice (2) de transport et l'enveloppe (3) de boîtier se forme un passage de transport (4) destiné au produit à transporter, l'arbre (1) à vis présentant au moins dans la zone d'une partie du passage de transport (4) un profilé (5) de surface, **caractérisée en ce que** le profilé (5) de surface présente des rainures (14) ou des saillies (15) qui s'étendent selon une inclinaison (17) vers un générateur (18), observé en vue latérale de l'arbre (1) à vis, de l'hélice de transport (2) en spirale.

2. Presse à vis selon la revendication 1, **caractérisée en ce que** les rainures (14) ou les saillies (15) du profilé (5) de surface s'étendent essentiellement dans le sens périphérique de l'arbre (1) à vis.

3. Presse à vis selon l'une des revendications 1 ou 2, **caractérisée en ce que** le profilé de surface (5), observé dans la section longitudinale par l'arbre à vis, vu dans la direction de transport (11) comprend une section (5a) de profilé croissante par rapport à l'axe (9) d'arbre de vis, de préférence selon un angle (16) entre 5 et 45° et une section (5c) de profilé décroissante de nouveau dans la direction de l'axe (9) d'arbre à vis, de préférence décroissante essentiellement normalement par rapport à l'axe (9) d'arbre à vis.

4. Presse à vis selon la revendication 3, **caractérisée en ce qu'**entre la section (5a) de profilé croissante et la section (5c) de profilé décroissante il est prévu une section (5b) de profilé s'étendant essentiellement parallèle à l'axe (9) d'arbre à vis.

5. Presse à vis selon la revendication 3 ou 4, **caractérisée en ce que** plusieurs groupes de sections (5a, 5b, 5c) de profil sont disposés les uns derrière les autres dans la direction de transport (11).

6. Presse à vis selon l'une des revendications 1 à 5, **caractérisée en ce que** le profilé de surface (5) est fabriqué d'un seul tenant avec l'arbre (1) à vis, de préférence réalisé selon un procédé d'usinage mécanique à partir de l'arbre (1) à vis.

7. Presse à vis selon l'une des revendications 1 à 5, **caractérisée en ce que** le profilé de surface (5) est au moins un élément rapporté (6) fabriqué séparément de l'arbre (1) de vis et disposé sur l'arbre (1) à vis.

8. Presse à vis selon la revendication 6, **caractérisée en ce que** l'élément rapporté (6) est une bande de tôle.

9. Presse à vis selon la revendication 7 ou 8, **caractérisée en ce que** l'élément rapporté (6) est enroulé de manière hélicoïdale sur l'arbre (1) à vis.

10. Presse à vis selon l'une des revendications 7 à 9, **caractérisée en ce que** l'élément rapporté (6) est soudé sur l'arbre (1) à vis.

11. Presse à vis selon l'une des revendications 1 à 10, **caractérisée en ce que** le profilé (5) de surface présente une profondeur (10) de profilé normale par rapport à l'axe (9) d'arbre à vis d'au moins 0,5 mm.
